# EUROPEAN PATENT SPECIFICATION

(11) **EP 1 652 252 B1**
(45) Date of publication and mention of the grant of the patent: **03.09.2014**
(21) Application number: 04779517.4
(22) Date of filing: 29.07.2004
(51) Int. Cl.: H01M 4/134, H01M 4/04, H01M 4/133, H01M 4/1393, H01M 4/1395, H01M 4/587

(54) **LITHIUM METAL DISPERSION IN ELECTRODES**
LITHIUMMETALL-DISPERSION IN ELEKTRODEN
DISPERSION DE METAL AU LITHIUM DANS DES ELECTRODES

(30) Priority: 29.07.2003 US 490685 P; 31.07.2003 US 491513 P; 28.07.2004 US 900715
(43) Date of publication of application: 03.05.2006
(73) Proprietor: FMC CORPORATION, Philadelphia, PA 19103 (US)
(72) Inventor: GAO, Yuan, Monroe, NJ 08831 (US); YAKOVLEVA, Marina, Gastonia, NC 28054 (US); ENGEL, John, Belmont, NC 28012 (US); JARVIS, Christine, Blewbury Oxfordshire OX11 9QL (GB); LAIN, Michael, Abingdon Oxfordshire OX14 5PX (GB)
(74) Representative: Chamberlain, Alan James
(86) International application number: PCT/US2004/024502
(87) International publication number: WO 2005/013397

(56) References cited:
- US-A- 5 028 500
- US-A- 5 162 176
- US-A- 5 753 388
- US-A- 2002 119 373

## Description

### FIELD OF THE INVENTION

This invention relates to secondary batteries having high specific capacities and particularly to electrodes comprising a host material and lithium metal dispersed in the host material.

### BACKGROUND OF THE INVENTION

Lithium and lithium-ion secondary or rechargeable batteries have found use in certain applications such as in cellular phones, camcorders, and laptop computers, and even more recently, in larger power applications such as in electric vehicles and hybrid electric vehicles. It is preferred in these applications that the secondary batteries have the highest specific capacity possible but still provide safe operating conditions and good cycleability so that the high specific capacity is maintained in subsequent recharging and discharging cycles.

Although there are various constructions for secondary batteries, each construction includes a positive electrode (or cathode), a negative electrode (or anode), a separator that separates the cathode and anode, and an electrolyte in electrochemical communication with the cathode and anode. For secondary lithium batteries, lithium ions are transferred from the anode to the cathode through the electrolyte when the secondary battery is being discharged, i.e., used for its specific application. During the discharge process, electrons are collected from the anode and pass to the cathode through an external circuit. When the secondary battery is being charged or recharged, the lithium ions are transferred from the cathode to the anode through the electrolyte.

Historically, secondary lithium batteries were produced using non-lithiated compounds having high specific capacities such as TiS₂, MoS₂, MnO₂ and V₂O₅, as the cathode active materials. These cathode active materials were coupled with a lithium metal anode. When the secondary battery was discharged, lithium ions were transferred from the lithium metal anode to the cathode through the electrolyte. Unfortunately, upon cycling, the lithium metal developed dendrites that ultimately caused unsafe conditions in the battery. As a result, the production of these types of secondary batteries was stopped in the early 1990's in favor of lithium-ion batteries.

Lithium-ion batteries typically use lithium metal oxides such as LiCoO₂ and LiNiO₂ as cathode active materials coupled with a carbon-based anode. In these batteries, the lithium dendrite formation on the anode is avoided, thereby making the battery safer. However, the lithium, the amount of which determines the battery capacity, is totally supplied from the cathode. This limits the choice of cathode active materials because the active materials must contain removable lithium. Also, delithiated products corresponding to LiCoO₂ and LiNiO₂ formed during charging (e.g. LiₓCoO₂ and LiₓNiO₂ where 0.4<x<1.0) and overcharging (i.e. LiₓCoO₂ and LiₓNiO₂ where x<0.4) are not stable. In particular, these delithiated products tend to react with the electrolyte and generate heat, which raises safety concerns.

Furthermore, new lithium-ion cells or batteries are initially in a discharged state. During the first charge of lithium-ion cell, lithium moves between electrodes, for instance from the cathode material, such as LiCoO₂ or LiNiO₂, to the anode material, such as graphite. The lithium moving from the cathode to the anode reacts with an electrolyte material in the cell, causing the formation of a passivation film on the anode. The passivation film formed on the anode is a solid electrolyte interface or SEI. Upon subsequent discharge, the lithium consumed by the formation of the SEI is not returned to the cathode. This results in a lithium-ion cell having a smaller capacity compared to the initial charge capacity because some of the lithium has been consumed by the formation of the SEI. The consumption of the available lithium reduces the capacity of the lithium-ion cell. This phenomenon is called irreversible capacity and is known to consume about 10% to 20% of the capacity of a lithium ion cell. Thus, after the initial charge of a lithium-ion cell, the lithium-ion cell loses about 10% to 20% of its capacity.

### SUMMARY OF THE INVENTION

The present invention is directed to a method for prelithiating a host material which comprises graphite, the method comprising:
dispersing the host material in a stabilized lithium metal powder to form a mixture of host material and lithium metal powder; and
vigorously stirring the mixture of host material and stabilized lithium metal powder to promote contact between the host material and stabilized lithium metal powder to promote lithiation of the host material, wherein the vigorous stirring is performed at a temperature of from 40°C to 180°C.

The host material is capable of absorbing and desorbing lithium in an electrochemical system and is suitable for use in a negative electrode of a lithium-ion battery. In certain embodiments, the lithium metal powder and the host material are dispersed in a non-aqueous solution, for example, a non-aqueous solution comprising a hydrocarbon solvent. In certain embodiments, the method further comprises forming the prelithiated host material into an electrode. The method may further comprise forming a battery using said electrode.

Also described herein is a battery or electrochemical cell including an electrode having lithium metal dispersed in a host material that is capable of absorbing and desorbing lithium in an electrochemical system. Batteries and/or electrochemical cells employing electrodes formed according to the embodiments of the invention can exhibit high specific capacities, good cycleability, and improved operational safety.

It is understood for the purposes of this invention that the term "battery" may mean and include a single electrochemical cell, or unicell, and/or one or more electrochemical cells connected in series and/or in parallel as known by those of skill in the art. Furthermore, the term "battery" includes, but is not limited to, rechargeable batteries and/or secondary batteries and/or electrochemical cells.

A battery formed according to embodiments of the invention can include a positive electrode (cathode) comprising an active material, a negative electrode (anode) comprising a host material capable of absorbing and desorbing lithium in an electrochemical system and lithium metal dispersed in the host material, a separator separating the cathode and the anode and an electrolyte in communication with the cathode and the anode. Preferably, the cathode active material is a compound that can be lithiated at an electrochemical potential of 2.0 V to 5.0 V versus lithium. For example, the cathode active material can be based on manganese, vanadium, titanium or molybdenum, such as MnO₂, V₂O₅, V₆O₁₃, LiV₃O₈, MoO₃, TiS₂, or MoS₂, or a mixture thereof. The cathode active material can include lithium metal, such as lithium powder, incorporated with a cathode active material that can be lithiated, such as MnO₂, V₂O₅, V₆O₁₃, LiV₃O₈, MoO₃, TiS₂, or MoS₂, or a mixture thereof. The anode host material comprises graphite. The lithium metal dispersed in the host material is preferably a finely divided lithium powder and in other embodiments a finely divided lithium powder having a mean particle size of less than about 20 microns. The amount of lithium metal dispersed in the anode is preferably no more than the maximum amount sufficient to intercalate in, alloy with, and/or be absorbed by the host material in the anode. For example, the amount of lithium dispersed in the host material is preferably no more than the amount needed to make LiC₆. However, additional lithium can be dispersed in a host material prior to electrode or anode formation to promote the prelithiation of the host material. The electrolyte and separator can be separate materials, such as a porous separator and fluid electrolyte, or can include a unitary structure or material, such as a gelled polymer that acts as both a separator and an electrolyte.

The lithium metal and the host material may be mixed together with a binder polymer and at least one solvent to produce a slurry. The slurry is applied to a current collector and dried to form the electrode. Alternatively, an electrode can be formed by chemical means by immersing the host material in a suspension of lithium metal in a non-aqueous liquid, and then forming the host material into an electrode.

Also described are methods of operating a battery. A battery may be provided in a charged state. The battery is preferably in a fully charged state having all of the removable lithium present in the battery in the anode of the battery. The battery is discharged by transmitting lithium ions from the anode to the cathode through the electrolyte or electrolyte/separator combination. The battery can be charged or recharged by transmitting lithium ions from the cathode to the anode through the electrolyte and then discharged again by transmitting lithium ions from the anode to the cathode. The charging and discharging steps can occur for numerous cycles while maintaining the high specific capacities of the cathode active materials and maintaining safe operating conditions.

A battery can be provided in an uncharged state as known with conventional lithium-ion batteries. Lithium metal can be provided in the anode and the cathode. For example, the anode of a traditional lithium-ion battery can be replaced by an anode including lithium and/or partially or fully lithiated host materials according to embodiments of the present invention. The introduction of an electrolyte into the battery promotes a reaction between the electrolyte and lithium metal in the anode, forming a solid electrolyte interface (SEI) at the anode. Charging the battery for the first time can accelerate the formation of the SEI. Formation of the SEI from the lithium metal in the anode can reduce and/or eliminate capacity losses in the battery due to irreversible capacity losses caused by SEI consumption of lithium from the cathode.

These and other features of the present invention will become more readily apparent to those skilled in the art upon consideration of the following detailed description and accompanying drawing, which describe both the preferred and alternative embodiments of the present invention.

### BRIEF DESCRIPTION OF THE DRAWING FIGURES

The invention can be more readily ascertained from the following description of the invention when read in conjunction with the accompanying drawings in which:
Fig. 1 illustrates a simplified secondary battery construction including a cathode, anode, separator and electrolyte;
Fig. 2 illustrates results of a Reactive System Screening Tool test for cyclohexane, lithium and ethylene propylene diene terpolymer;
Fig. 3 illustrates results of a Reactive System Screening Tool test for dimethyl propylene urea with lithium powder;
Fig. 4 illustrates an electrode; and
Fig. 5 illustrates an electrode.

### DETAILED DESCRIPTION OF THE INVENTION

In the drawings and the following detailed description, embodiments of the present invention are described in detail to enable practice of the invention. Although the invention is described with reference to these specific embodiments, it is understood that the invention is not limited to these embodiments. The invention includes numerous alternatives, modifications, and equivalents as will become apparent from consideration of the following detailed description and accompanying drawings.

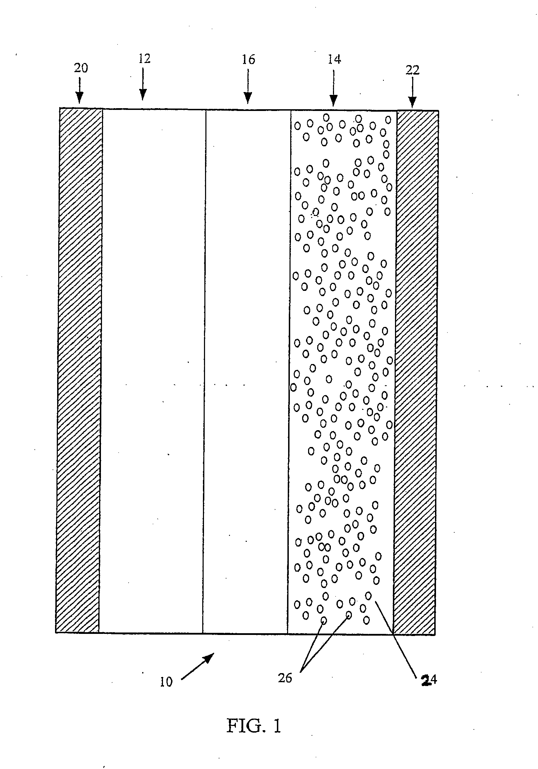

As illustrated in Figure 1, there is described a battery 10 including a positive electrode, or cathode 12, a negative electrode, or anode 14, and a material 16. The material 16 can include a separator for separating the cathode 12 and the anode 14. Material 16 can also include an electrolyte in electrochemical communication with the cathode 12 and the anode 14. The battery 10 also includes a current collector 20 in electrical contact with the cathode 12 and a current collector 22 in electrical contact with the anode 14. The current collectors 20 and 22 can be in electrical contact with one another through an external circuit (not shown). The battery 10 can have any construction known in the art, such as a "jelly roll," stacked construction, or the like. Although various embodiments of the present invention are explained with reference to anodes and cathodes, it is understood that the embodiments of the present invention apply to electrodes in general and are not limited to either an anode or cathode.

The cathode 12 is formed of an active material, which is typically combined with a carbonaceous material and a binder polymer. The active material of the cathode 12 is preferably a material that can be lithiated and/or delithiated at a useful voltage (e.g. 2.0 V to 5.0 V versus lithium). Preferably, non-lithiated materials based on manganese, vanadium, titanium or molybdenum, such as MnO₂, V₂O₅, V₆O₁₃, MoO₃, TiS₂, MoS₂, or mixtures thereof, can be used as the active material. More preferably, MnO₂ is used as the cathode active material. However, lithiated materials can also be used to form cathode 12. For instance, LiMn₂O₄ or LiV₃O₈ can be used. Further, the active material can be a material mixed with lithium. For instance, an active material can be mixed with lithium powder.

Non-lithiated active materials are preferred as the cathode 12 active material because they generally have higher specific capacities than the lithiated active materials and can provide increased power over batteries that include lithiated active materials. Furthermore, because the anode 14 includes lithium, it is not necessary for the cathode 12 to include a lithiated material for the battery 10 to operate. The amount of active material provided in the cathode 12 is preferably sufficient to accept the removable lithium present in the anode 14. For example, if MnO₂ is the cathode 12 active material, then one mole of MnO₂ is preferably present in the cathode 12 per mole of lithium in the anode 14 to produce LiMnO₂ in the cathode 12 upon discharge.

The removable lithium cycled in the battery can be provided by the anode 14 and the battery can be assembled or prepared in a fully charged state. Preparation of the battery in a fully charged state allows the use of non-lithiated active materials capable of being lithiated for forming cathode 12. Lithium powder can be mixed with non-lithiated active materials capable of being lithiated to form a cathode 12 to provide a discharged cathode in a battery. Nevertheless, cathode 12 can also include a minor amount of one or more lithiated active materials (e.g. LiCoO₂ or LiNiO₂) that do not further absorb lithium at a voltage between 2.0V and 5.0V and the battery can still be provided in a primarily charged state. The cathode 12 can also include lithium metal (e.g. lithium powder). The cathode preferably has less than 50% (molar) and more preferably less than 10% (molar) of the lithiated material (e.g. LiCoO₂, LiNiO₂, or lithium powder) as the active material. Because LiCoO₂ and LiNiO₂ do not further absorb lithium at above 2.0V, the presence of these materials in the cathode 12 does not reduce the amount of cathode active material needed to accept the removable lithium from the anode 14.

The anode 14 is formed of a host material 24 capable of absorbing and desorbing lithium in an electrochemical system with lithium metal 26 dispersed in the host material. For example, the lithium present in the anode 14 can intercalate in, alloy with, or be absorbed by the host material 24 when the battery (and particularly the anode 14) is recharged. The host material 24 includes graphite. In addition, the host material 24 can include a small amount of carbon black (e.g. less than 5% by weight) as a conducting agent. The lithium metal 26 is preferably provided in the anode 14 as a finely divided lithium powder. More preferably, the lithium metal 26 has a mean particle size of less than about 20 microns, and even more preferably less than about 10 microns, although larger particle sizes can also be used. The lithium metal can be provided as a pyrophoric powder or as a stabilized low pyrophorosity powder, for example, by treating the lithium metal powder with CO₂.

The anode 14 is capable of reversibly lithiating and delithiating at an electrochemical potential relative to lithium metal of from greater than 0.0 V to less than or equal to 1.5 V. If the electrochemical potential is 0.0 V or less versus lithium, then the lithium metal will not reenter the anode 14 during charging. Alternatively, if the electrochemical potential is greater than 1.5 V versus lithium then the battery voltage will be undesirably low. Preferably, the amount of lithium metal 26 present in the anode 14 is no more than the maximum amount sufficient to intercalate in, alloy with, or be absorbed by the host material 24 in the anode 14 when the battery is recharged. The amount of lithium 26 is preferably no more than the amount sufficient to make LiC₆. In other words, the molar ratio of lithium to carbon in the anode is preferably no more than 1:6. In other embodiments, however, the host material 24 in the anode 14 can be prelithiated such that the total ratio of lithium to carbon, or host material 24, is greater than 1:6.

The anode 14 can be prepared by providing a host material 24 that is capable of absorbing and desorbing lithium in an electrochemical system, dispersing lithium metal 26 in the host material 24, and forming the host material 24 and the lithium metal 26 dispersed therein into an anode 14. The host material 24 is prelithiated prior to the formation of the anode 14. Preferably, the lithium metal 26 and the host material 24 are mixed with a non-aqueous liquid and a binder, and formed into a slurry. The slurry is then used to form the anode 14, for example, by coating a current collector 22 with the slurry and then drying the slurry.

Formation of an anode 14, or other type of electrode, according to embodiments of the invention is achieved by combining a lithium metal powder, a fine particle host material, a binder polymer, and a solvent to form a slurry. The slurry can be coated on a current collector and dried to form the anode 14. For example, a lithium metal powder can be combined with a fine particle host material such as meso carbon micro beads (MCMB), graphite, carbon black, or other lithium-ion anode materials to form a mixture. A binder polymer and solvent can be combined with the mixture to form the desired slurry. To form an anode 14, the slurry is coated on a current collector, such as copper foil or mesh, and allowed to dry. The dried slurry on the current collector, which together forms the electrode, is pressed to complete the formation of the anode 14. The pressing of the electrode after drying densities the electrode so that active material can fit in the volume of the anode 14. Pressing of the electrode typically involves passing the electrode through a pair or a series of pairs of polished rollers with a pre set gap between the two rollers or by using another pressing technique. Pressing can also be done with a pre set pressure. The dried slurry and current collector combination provide the anode 14.

In accordance with the methods of the present invention a host material 24 is prelithiated. For the purposes of this invention the terms "prelithiate" and/or "prelithiating" when used with reference to a host material 24 refers to the lithiation of the host material 24 prior to contact of the host material with an electrolyte. Prelithiation of a host material can reduce irreversible capacity loss in a battery caused by the irreversible reaction between the lithium metal powder particles in an electrode with an electrolyte in parallel with the lithiation of the host material.

The prelithiation of a host material 24 occurs by contacting the host material 24 with a stabilized lithium metal powder. Contact between the lithium metal powder and host material 24 lithiates the host material, thereby prelithiating the host material 24.

The host material 24 and a stabilized lithium metal powder are mixed together such that at least a portion of the host material 24 comes in contact with at least a portion of the lithium metal powder. Vigorous stirring is used to promote contact between the host material 24 and the lithium metal powder. Contact between the lithium metal powder and host material 24 results in the partial lithiation of the host material 24, creating a prelithiated host material 24.

The prelithiation of host material 24 is performed at temperatures of from 40 °C to 180 °C. Prelithiation performed at temperatures above 40°C increases the interaction and/or diffusion between a lithium metal powder and host material 24, increasing the amount of host material 24 that can be lithiated in a given time period.

When exposed to temperatures above room temperature lithium metal powder becomes softer and/or more malleable. When mixed with another substance, the softer lithium metal powder makes more contact with a substance mixed with it. For instance, the interaction and/or diffusion between a mixture of lithium metal powder and a host material 24 that is being agitated is less at room temperature than if the temperature of the mixture is raised above room temperature. Increasing the contact between a lithium metal powder and the host material 24 increases the amount of lithiation of the reactive species. Therefore, by raising the temperature of a mixture of lithium metal powder and host material 24, the interaction and/or diffusion between the two substances increases, which also increases the lithiation of the host material 24.

As described, the temperature of a mixture of lithium metal powder and host material 24 is raised to promote lithiation of the host material 24. For instance, the temperature of a mixture of lithium metal powder and a host material 24 can be raised to 180 °C or less to promote lithiation of a host material 24. More preferably, the temperature of a mixture of lithium metal powder and host material 24 can be raised to between about 40 °C and about 150 °C to promote the lithiation of the host material 24. A host material 24 lithiated in such a manner results in a prelithiated host material 24.

In other embodiments, a host material 24 is introduced to a solution containing lithium metal powder. The solution can include, for example, mineral oil and/or other solvents or liquids that are preferably inert or non-reactive with lithium metal powder in the solution. When mixed with the solution, the solution is preferably agitated in a manner to promote contact between the host material 24 and the lithium metal powder. Contact between the host material 24 and lithium metal powder promotes the lithiation of the host material 24, resulting in a prelithiated host material 24 that can be used to form an electrode.

According to embodiments of the present invention, electrodes can be formed of prelithiated host materials 24. A prelithiated host material 24 recovered from the mixtures or solutions described herein can be separated and used to form an electrode. Alternatively, the mixture or solution containing a portion of the prelithiated host material 24 can be used to form an electrode without separating the prelithiated host material 24.

The amount of prelitiation within the host material 24 can be adjusted for the particular application in which the host material 24 is to be used. Prelithiated host materials 24 can include prelitiation percentages up to 100 percent. In other words, the host materials 24 can be completely lithiated or only partially lithiated. Electrodes formed according to embodiments of the present invention preferably include a prelithiated host material 24.

The amount of lithium necessary for the formation of an electrode using a prelitiated host material 24 according to embodiments of the present invention can vary depending upon the amount of prelithiation that has occurred in the host material 24. The greater the amount of prelithiation in the host material 24, the less lithium required in the electrode. For example, if the host material 24 of an anode is prelithiated such that ninety percent of the host material 24 that will lithiate has lithiated, a smaller amount of lithium can be required for anode formation.

Prelithiation of a host material 24 can also be accomplished using pressure. Applying pressure to a mixture of lithium metal powder and a host material 24 increases the contact between the lithium metal powder and the host material 24, thereby promoting lithiation of the host material 24.

For example, a mixture of lithium metal powder and host material 24 is pressed to encourage contact between the lithium metal powder and the host material 24. The mixture can be pressed using various methods for applying pressure to a substance or compound. The increased contact due to the pressure promotes the lithiation of the host material 24.

Pressure may be applied to a mixture of lithium metal powder and host material 24 to promote lithiation of the host material 24. Pressure can be applied, for example, by calendaring and/or using die combined with pre-cuts capability, or any other methods, the selection of which will be within the skill of one in the art.

Lithium metal powder and graphite, a host material, were mixed and pressed to determine if the mixture underwent any changes. In those experiments, the mixtures exhibited a change of color after pressing. The change of color indicates that the graphite, or host material 24, underwent lithiation. For example, the color of the lithium metal powder and graphite mixtures changed from black to a bronze. The bronze color of the pressed material exhibits the same color as lithiated graphite.

Other substances can also be mixed with the lithium metal powder and host material 24 prior to pressing or pressure application. The lithiation of host material 24 caused by pressing or pressure application may or may not be affected by the presence of such materials. For instance, a lithium metal 26 and a host material 24 can be mixed with a binder polymer and/or a conductive agent prior to pressing or pressure application. The application of pressure to the mixture lithiates the host material 24. The pressing or pressure application may be performed prior to the addition of any slurry solvent addition or formation of a slurry of the lithium metal powder, host material 24, and other constituents.

It has also been found that prelithiation of a host material 24 can occur as a result of the pressing process during the formation of an electrode. The pressing of a dried slurry and current collector combination initiates lithiation of the host material 24 in the dried slurry. The pressure caused by pressing promotes contact between the lithium metal powder and host material in the dried slurry, resulting in the lithiation of the host material 24. It has also been found that the lithiation of the host material 24 caused by the pressing results in the presence of void spaces within the dried coating. The void spaces appear to be a byproduct of the lithiation reaction, for example, space left by the lithium when lithiated with the host material 24. The presence of too much void space in an electrode, however, is undesirable because it reduces the electrode density and thereby the energy density of the battery.

The void spaces caused by lithiation occurring during the pressing of the dried slurry can be reduced or eliminated by subjecting the pressed dried slurry to a second pressing process. A pressed dried slurry and current collector combination may be re-pressed during a second pressing to eliminate or reduce any void spaces caused by a first pressing. In addition, the second pressing compacts the dried slurry, increasing the density of the pressed, dried slurry. The increase in dried slurry density increases the volumetric energy density of an electrode and/or battery formed from the dried slurry and current collector combination. Both volumetric and gravimetric energy densities are important for batteries. While gravimetric energy density is more important for large batteries, such as in cars, volumetric energy density is more important for small batteries, such as in cell phones.

For example, a slurry including a graphite host material and lithium metal powder can be applied to a current collector. After drying, the dried slurry is subjected to a pressing process. The pressing process promotes lithiation of the graphite in the dried slurry. The lithiation of the graphite results in the formation of voids within the dried slurry. A second pressing of the dried slurry and current collector combination reduces the volume of voids in the pressed, dried slurry and increases the density of the dried slurry. The resulting dried slurry and current collector combination can be used to form an electrode having a prelithiated host material 24.

A dried slurry applied to a current collector can be subjected to multiple pressings to promote the lithiation of the host material 24 in the dried slurry and to reduce the volume of void spaces caused by such lithiation. Multiple pressings also increase the density of the dried slurry and current collector combination, which increases the volumetric energy density of an electrode formed from the dried slurry and current collector combination.

The lithiation of a host material in a dried slurry being pressed may be promoted by increasing the temperature of the pressing process. The lithiation of a host material in a dried slurry caused by the pressing of, or application of pressure to, a dried slurry is slow at room temperature. To accelerate the lithiation of a host material in a dried slurry during pressing, the temperature of the pressing process can be increased.

It is believed that increasing the temperature during a pressing process softens lithium metal powder in the dried slurry, thereby increasing the contact of the lithium metal powder with the host material 24. The increased contact between the lithium metal powder and host material 24 promotes lithiation of the host material 24. As the temperature of the pressing process is raised the lithiation of the host material 24 is increased.

In addition, the acceleration of the lithiation caused by the increased temperature of the pressing process helps to reduce the volume of voids in the dried slurry being pressed. As lithiation occurs in the dried slurry, voids appear. The acceleration of lithiation caused by the increased temperatures in the pressing process increases the amount or volume of voids being formed in a given time period within the dried slurry during pressing. However, the voids are reduced or eliminated by the pressure being applied to the dried slurry as the lithiation is taking place. The reduction in void space increases the density of the dried slurry.

Dried slurries pressed at elevated temperatures exhibit greater lithiation of the host materials in the dried slurry as compared to dried slurries that are pressed at room temperature for the same amount of time. Furthermore, dried slurries that are pressed at elevated temperatures exhibit higher densities due to the increased production of voids caused by faster lithiation and the reduction of voids caused by the pressure of the pressing process.

An electrode having a lithiated host material can be formed without the addition of lithium metal powder by laminating lithium metal foil, mesh, or other pieces to an electrode having a host material. Lamination of a lithium metal to an electrode creates contact between the lithium metal and host material in the electrode. This contact results in the lithiation of the host material, especially when an electrolyte contacts the material when being used in a battery.

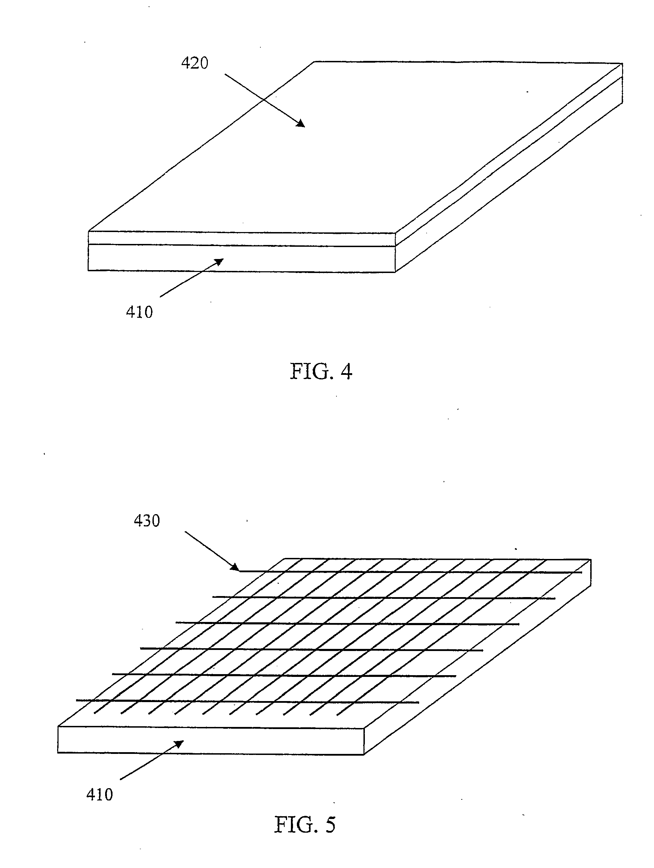

For example, an electrode 410 including a host material, such as graphite, is illustrated in Fig. 4. A lithium metal foil 420 is laminated to the electrode 410 forming a layer of lithium metal foil 420 over at least a portion of the electrode 410. The contact between the lithium metal foil 420 and host material results in the lithiation of at least a portion of the host material, especially when the electrolyte is introduced.

Lamination of the lithium metal foil 420 to the electrode 410 can be accomplished by pressing the lithium metal foil 420 into the electrode 410. Because lithium metal foils are reasonably soft, lamination processes can be performed at room temperature or at higher temperatures. In those instances where lamination temperatures exceed room temperature the lithiation of the host material in the electrode 410 can take place during the lamination process itself and can even be accelerated. It is believed that higher temperatures soften the lithium metal foil 420, which increases the amount of contact between the lithium metal foil 420 and host material. The increased contact and the higher diffusion rate of lithium at higher temperatures increases lithiation in the host material. Temperatures at which a lithium metal foil 420 can be laminated to an electrode 410 range between about 10 °C and about 150 °C and preferably between about 30 °C and about 120 °C.

The electrode 410 to which the lithium metal foil 420 is laminated may or may not include prelithiated host material. The host material in electrodes 410 having non-lithiated host materials can be lithiated through the lamination process. Similarly, the host materials in electrodes 410 that include at least some lithiated host material can be further lithiated using the lamination processes described herein.

A lithium mesh 430 can be added to a pre-fabricated electrode 410 as illustrated in Fig. 5. Addition of the lithium mesh 430 is similar to the lamination of a lithium metal foil 420 to an electrode 410. The lithium mesh 430 can be pressed onto the electrode 410 or otherwise laminated to the electrode 410. Contact between the lithium metal in the lithium metal mesh 430 and the host material of the electrode 410 initiates lithiation of the host material where the lithium mesh contacts the host material. The lamination or attachment of the lithium mesh 430 to the electrode 410 can occur at room temperature or higher temperatures, such as between about 10 °C and about 150 °C.

Although the contact between the lithium metal mesh 430 and the host material of the electrode 410 can initiate lithiation of the host material, lithiation is not necessary. During the formation of a battery using an electrode 410 having a lithium metal mesh 430 attached thereto, electrolyte contacts the lithium metal mesh 430 and passes through the lithium metal mesh 430 into the electrode 410. The electrolyte in contact with both the host material in the electrode and the lithium mesh completes a path for lithium ion transport between the lithium metal mesh 430 and host material, which facilitates the lithiation of the host material in the electrode 410.

The shape and size of the lithium mesh 430 is not limited in the present invention. Furthermore, it is understood that other lithium metal pieces can be used as substitutes for, in place of, or in combination with the lithium metal foil 420 or lithium mesh 430 of the present invention. The lamination of lithium metal pieces into an electrode 410 according to embodiments of the present invention can be used to introduce lithium into the premanufactured electrode containing the host material. Lithiation of the host material from the introduced lithium can occur during or after lamination such as during electrolyte introduction.

A thin lithium layer can be deposited on the surface of a pre-manufactured electrode using standard thin film technologies, such as thermal evaporation, electron beam evaporation, sputtering, and laser ablation. A vacuum is used during the deposition process to avoid reactivity between the atomic lithium and molecules of lithium reactive substances such as water, oxygen, and nitrogen. A vacuum of greater than 1 milli-Torr (10E-03 Torr) is desirable. When electron beam deposition is used a vacuum of 10E-04 Torr is desired and a vacuum of 10E-06 Torr is preferred to avoid interaction between the electron beam and any residual air molecules.

The evaporative deposition techniques described herein involve the heating of a lithium metal to create a lithium vapor. The lithium metal can be heated by an electron beam or by electrical current resistivity on or around the lithium metal. The lithium vapor deposits lithium onto a substrate such as a pre-manufactured electrode. To promote the deposition of lithium metal the substrate can be cooled or maintained at a temperature lower than the temperature of the lithium vapor. A thickness monitor such as a quartz crystal type monitor can be placed near the substrate to monitor the thickness of the film being deposited. A monitor can be passive or active, wherein it can be linked to a feedback loop to control the deposition rate of lithium by controlling the lithium vapor creation when the desired deposition thickness is reached.

Laser ablation and sputtering techniques can be used to promote thin lithium film growth on pre-manufactured electrodes. For example, argon ions can be used in the sputtering process to bombard a solid lithium metal target. The bombarding knocks lithium off of the target and deposits it on the surface of a substrate. Laser ablation processes can be used to knock lithium off of a lithium target. The separated lithium is then deposited on a substrate such as a pre-manufactured electrode.

Following the formation of a lithium film using a deposition process an appropriate gas, such as carbon dioxide, can be contacted with the lithium layered electrodes to form a passivation layer over the lithium layer, which facilitates the handling of the layered electrode outside of the vacuum environment.

The pre-manufactured electrode can be masked during lithium deposition such that the lithium metal deposited on the pre-manufactured electrode is deposited in a desired pattern. Alternatively, a continuously formed film could be imprinted with holes or openings after deposition to allow electrolyte to pass into the electrode, which facilitates the lithiation of the host material in the electrode.

Binder polymers used with embodiments of the invention include binder polymers that are sufficiently non-reactive with the lithium in the anode 14. Binder polymers capable of maintaining the stability of lithium during the anode 14 formation process and capable of providing stable anodes 14 are preferred. In addition, the binder polymers are preferably soluble in a chosen solvent or co-solvent at the temperatures used in the anode 14 production process. Some examples of preferred binder polymers that can be used with embodiments of the present invention include polyvinylidene fluoride, ethylene propylene diene terpolymer, ethylene propylene diene monomer, ethylene acrylic acid, ethylene vinyl acetate, and styrene-butadiene rubber.

Solvents used with embodiments of the invention must also be non-reactive with the lithium metal and the binder polymers at the temperatures used in the anode 14 production process. Preferably, a solvent or co-solvent possesses sufficient volatility to readily evaporate from a slurry to promote the drying of a slurry applied to a current collector. For example, solvents can include acyclic hydrocarbons, cyclic hydrocarbons, aromatic hydrocarbons, symmetrical ethers, unsymmetrical ethers, and cyclic ethers.

Lithium metal used with various embodiments of the present invention is provided as lithium powder. The lithium powder can be treated or otherwise conditioned for stability during transportation. For instance, dry lithium powder can be formed in the presence of carbon dioxide as conventionally known. The dry lithium powder can be used with the various embodiments of the present invention. Alternatively, the lithium powder can be formed in a suspension, such as in a suspension of mineral oil solution or other solvents. Formation of lithium powder in a solvent suspension can facilitate the production of smaller lithium metal particles. In some embodiments of the present invention, a lithium powder can be formed in a solvent that can be used with various embodiments of the present invention. The lithium metal powder formed in the solvent can be transported in the solvent. Further, the lithium metal powder and solvent mixture can be used with embodiments of the present invention, which may remove a mixing step from an electrode production process because the solvent and lithium metal powder are available as a single component. This can decrease production costs and allow the use of smaller or finer lithium metal powder particles with the embodiments of the present invention.

Various binder polymer and solvent combinations were tested with the embodiments of the present invention to determine binder polymer-solvent pairs that are compatible and stable. Further, anodes 14 formed from the binder polymer-solvent pairs were tested to ensure compatibility. Preferred binder polymer-solvent pairs for use with the production of anodes 14 according to some embodiments of the invention are listed in Table I.

**Table I**

| Binder Polymer | Suitable Solvents |
|---|---|
| ethylene propylene diene terpolymer or ethylene propylene diene monomer | acyclic and cyclic hydrocarbons, including n-hexane, n-heptane, cyclohexane, and the like; aromatic hydrocarbons such as toluene, xylene, isopropylbenzene (cumene), and the like |
| polyvinylidene fluoride | symmetrical, unsymmetrical, and cyclic ethers, including di-n-butyl ether, methyl t-butyl ether, tetrahydrofuran, and the like |
| ethylene vinyl acetate | aromatic hydrocarbons such as toluene, xylene, isopropylbenzene (cumene), and the like |
| styrene-butadiene rubber | aromatic hydrocarbons such as toluene, xylene, isopropylbenzene (cumene), and the like; symmetrical, unsymmetrical, and cyclic ethers, including di-n-butyl ether, methyl t-butyl ether, tetrahydrofuran, and the like |

It is understood that additional binder polymer-solvent pairs can also be used or combined to form slurries and anodes 14 in accordance with the embodiments of the invention. Representative Examples of tests performed to determine the feasibility for using different binder polymers, solvents, and binder-polymer-solvent pairs with the various embodiments of the present invention are described in Examples 1 through 3.

### Example 1 - Ethylene propylene diene terpolymer and Cyclohexane

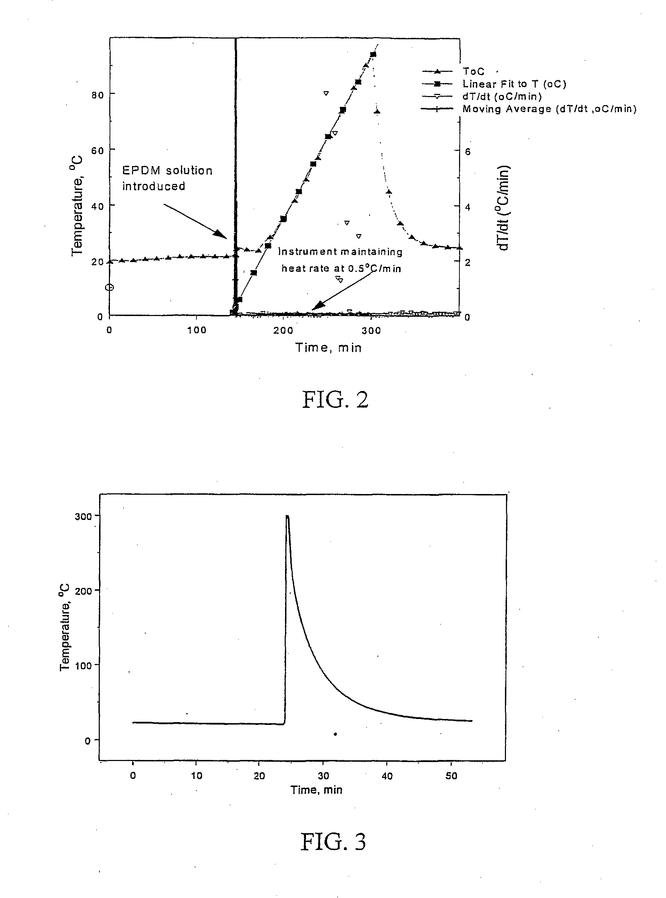

A coating solution containing cyclohexane, lithium powder and ethylene propylene diene terpolymer (Nordel® IP 4570) was tested for thermal stability over the temperature range of interest. The solution consisted of 8.8 ml of cyclohexane, 0.24 g of lithium powder, and 0.127 g of ethylene propylene diene terpolymer. A Reactive System Screening Tool was used as the calorimeter of choice. During the test, the pressure inside the chamber was set at 200 psig using argon to enable testing of the system beyond the boiling point of cyclohexane. No self-heating was detected over a temperature range of 19 °C to 94 °C. A plot of the test is illustrated in Fig. 2. The boiling point of cyclohexane is 80.7 °C at 1 atm, so scanning above that temperature was not necessary and the test was stopped at 94 °C. As illustrated in Fig. 2, the instrument maintained a steady heat rate of 0.5 °C per minute during the ramp. If self-heating had been detected, the heat rate would have increased above this level. The temperature trend is linear during the heating period which indicates that no self-heating of the material occurred. The lack of self-heating indicates that the combination of ethylene propylene diene terpolymer, cyclohexane, and lithium powder is a stable mixture.

### Example 2 - Lithium powder and p-xylene

Lithium powder, in an amount of 0.531 g, was mixed with 8 ml of p-xylene and a thermal stability test was conducted using the Reactive System Screening Tool described in Example 1. The test was conducted between room temperature and 180 °C. No self-heating was detected over this temperature range, indicating that lithium powder is stable in p-xylene between room temperature and 180 °C.

### Example 3 - Dimethyl propylene urea and Lithium powder

A solution containing dimethyl propylene urea and lithium powder was tested for thermal stability using Reactive System Screening Tool techniques with the same set-up and procedure as described in Example 1. Self-heating was detected within 3 seconds of the addition of dimethyl propylene urea to the lithium powder at a temperature of 25 °C. The self-heating increased at a rate of over 1000 °C per minute. Fig. 3 illustrates the thermal run away of the test. The presence of self-heating in the system indicates that the dimethyl propylene urea is not a suitable solvent for forming the anodes of the present invention because it reacts with lithium powder.

In an alternative anode 14 production process, the lithium metal can be provided in the anode 14 by immersing the host material 24 in a suspension containing lithium metal in a non-aqueous liquid such a hydrocarbon solvent (e.g. hexane). The lithium metal 26 used in the suspension is preferably a finely divided lithium powder. The host material 24 can be formed into the shape of the anode and then dipped into the lithium metal suspension or it can be combined with the lithium metal suspension to form a slurry and then applied to the current collector and dried to form the anode 14. The host material 24 is prelithiated. The non-aqueous liquid used to form the suspension can be removed by drying the anode 14 (e.g. at an elevated temperature). Regardless of the method used, the lithium metal is preferably distributed as well as possible into the host material.

As illustrated in Figure 1, the cathode 12 can be separated from the anode 14 by a material 16. Typically, the material 16 is an electrical insulating material such as polyethylene, polypropylene, or polyvinylidene fluoride (PVDF).

The secondary battery 10 further includes an electrolyte that is in electrochemical communication with the cathode 12 and anode 14. The electrolyte can be non-aqueous liquid, gel, or solid and preferably comprises a lithium salt, for example, LiPF₆. The electrolyte is provided throughout the battery 10 and particularly within the cathode 12, anode 14 and material 16. Typically, the electrolyte is a liquid, and the cathode 12, anode 14 and material 16 are porous materials that are soaked in the electrolyte to provide electrochemical communication between these components. Alternatively, the material 16 and electrolyte can be a unitary composition. For example, a gelled polymer can be used as both an electrolyte and a separator in the battery.

A battery 10 includes current collectors 20 and 22, which are used to transmit electrons to an external circuit. Preferably, the current collector 20 is made of aluminum foil and current collector 22 is made of copper foil.

A battery 10 can be prepared by methods known in the art and preferably has a layer thickness within the following ranges:

| Layer | thickness |
|---|---|
| Current collector (20) | 10-40 µm |
| Cathode (12) | 70-200 µm |
| Material (16) | 10-35 µm |
| Anode (14) | 50-150 µm |
| Current collector (22) | 10-40 µm |

The battery 10 can include an electrolyte dispersed throughout the cathode 12, anode 14 and separator 16, and a casing (not shown). The electrolyte can be integrated with the material 16.

The battery 10 may be initially in a charged state and more preferably a fully charged state. The battery 10 can be discharged by transmitting lithium ions from the anode 14 to the cathode 12 through the electrolyte. At the same time, electrons are transmitted from the anode 14 to the cathode 12 through the current collector 22, the external circuit, and the current collector 20. The battery 10 can be charged or recharged by transmitting lithium ions from the cathode 12 to the anode 14 through the electrolyte. The charging and discharging steps can occur for numerous cycles while maintaining the high specific capacities of the cathode active materials and maintaining safe operating conditions.

A battery can be provided in an uncharged state as known with conventional lithium-ion batteries. Lithium metal can be provided in the anode and/or the cathode. For example, the anode of a lithium-ion battery can be replaced by an anode including lithium according to embodiments of the present invention. The anode includes prelithiated host material. The introduction of an electrolyte in the battery can promote a reaction between the electrolyte and lithium metal in the anode, initiating the formation of a solid electrolyte interface (SEI) at the anode. Charging the battery for the first time can accelerate the formation of the SEI. Formation of the SEI from the lithium metal in the anode can reduce and/or eliminate capacity losses in the battery due to irreversible capacity losses caused by SEI consumption of lithium from the cathode.

For example, upon the initial charge of a lithium-ion battery having a lithium containing cathode material and only a non-lithium containing anode material, lithium from the lithium containing cathode material reacts with the electrolyte in the battery, forming a solid electrolyte interface (SEI) at the anode. The SEI consumes some of the lithium from the cathode, resulting in an irreversible capacity loss in the battery. Irreversible capacity loss in a battery can amount to a capacity loss of between 10 and 20 percent. However, if the anode of the lithium-ion battery is formed with lithium according to embodiments of the present invention, the lithium in the anode can react with the electrolyte to form the SEI at the anode during the initial charge of the battery. The formation of the SEI from lithium contained in the anode preserves the lithium in the cathode, or in the battery, resulting in a reduced capacity loss due to irreversible capacity. This can reduce and/or eliminate battery capacity losses due to the phenomenon known as irreversible capacity.

Batteries as described herein can be used for various types of applications. For example, the battery can be used in portable electronics such as cellular phones, camcorders, digital recording devices and laptop computers, and in large power applications such as for electric vehicles and hybrid electric vehicles. Batteries employing lithium-containing anodes can provide greater options for choice of cathode materials-which can allow expanded uses for and/or safety of the battery. In addition, batteries employing lithium-containing anodes can reduce the effects of irreversible capacity on the battery.

The present invention enables the provision of batteries that can have a high specific capacity, safe operating conditions and good cycleability. In particular, non-lithiated materials can be used as cathode active material in a battery because lithium metal is provided in the anode. The non-lithiated materials can have higher specific capacities than the lithiated materials presently used in lithium-ion batteries. Unlike traditional lithium batteries having non-lithiated cathode active materials and metallic lithium anodes, it has been discovered that batteries produced using non-lithiated cathode active materials combined with the anodes formed in accordance with embodiments of the invention operate safely and do not generate lithium dendrites upon cycling. Furthermore, the batteries formed in accordance with embodiments of the present invention are safer to operate than lithium-ion batteries, which become unstable when lithium is removed from the cathode during charging. In particular, because the cathode active material in the batteries is typically in a fully charged state when the battery is originally prepared, it can be more stable then the cathode materials used in lithium-ion batteries. Moreover, the batteries can be charged and discharged numerous times while maintaining safe operating conditions and the high specific capacities of the cathode active materials. In addition, the presence of lithium in an anode material can help to reduce irreversible capacity loss in the battery because the lithium in the anode can be used to form the SEI rather than lithium from the cathode.

## Claims

1. A method for prelithiating a host material, comprising:
dispersing the host material in a stabilized lithium metal powder to form a mixture of host material and lithium metal powder; and
vigorously stirring the mixture of host material and stabilized lithium metal powder to promote contact between the host material and stabilized lithium metal powder to promote lithiation of the host material, wherein the vigorous stirring is performed at a temperature of from 40°C to 180°C;
wherein the host material comprises graphite;
wherein the host material is capable of absorbing and desorbing lithium in an electrochemical system and is suitable for use in a negative electrode of a lithium-ion battery; and
wherein the term "prelithiating" refers to the lithiation of the host material prior to contact with an electrolyte.

2. The method of claim 1, wherein the lithium metal powder and the host material are dispersed in a non-aqueous solution.

3. The method of claim 2, wherein the non-aqueous solution comprises a hydrocarbon solvent.

4. The method of claim 1, further comprising forming the prelithiated host material into an electrode.

5. The method of claim 4, further comprising forming a battery using said electrode.

## Patentansprüche

1. Verfahren für die Vorlithiierung eines Wirtsmaterials, umfassend
Dispergieren des Wirtsmaterials in einem stabilisierten Lithiummetallpulver zum Bilden eines Gemischs aus Wirtsmaterial und Lithiummetallpulver; und
energisches Verrühren des Gemischs aus Wirtsmaterial und stabilisiertem Lithiummetallpulver zum Begünstigen von Kontakt zwischen dem Wirtsmaterial und stabilisiertem Lithiummetallpulver zum Begünstigen von Lithiierung des Wirtsmaterials, wobei das energische Verrühren bei einer Temperatur von zwischen 40°C und 180°C ausgeführt wird;
wobei das Wirtsmaterial Graphit umfasst;
wobei das Wirtsmaterial fähig ist, in einem elektrochemischen System Lithium zu absorbieren und zu desorbieren, und geeignet ist für die Verwendung in einer negativen Elektrode einer Lithiumionenbatterie; und
wobei der Begriff "Vorlithüerung" sich auf die Lithiierung des Wirtsmaterials vor dem Kontakt mit einem Elektrolyten bezieht.

2. Verfahren gemäß Anspruch 1, wobei das Lithiummetallpulver und das Wirtsmaterial in einer nicht wässrigen Lösung dispergiert sind.

3. Verfahren gemäß Anspruch 2, wobei die nicht wässrige Lösung ein Kohlenwasserstofflösungsmittel umfasst.

4. Verfahren gemäß Anspruch 1, zudem umfassend Ausbilden des vorlithiierten Wirtsmaterials zu einer Elektrode.

5. Verfahren gemäß Anspruch 4, zudem umfassend Ausbilden einer Batterie unter Verwendung der Elektrode.

## Revendications

1. Un procédé de prélithiation d'un matériau hôte, comprenant :
la dispersion du matériau hôte dans une poudre métallique de lithium stabilisée de façon à former un mélange de matériau hôte et de poudre métallique de lithium, et
l'agitation vigoureuse du mélange de matériau hôte et de poudre métallique de lithium stabilisée de façon à favoriser un contact entre le matériau hôte et la poudre métallique de lithium stabilisée de façon à favoriser une lithiation du matériau hôte, où l'agitation vigoureuse est exécutée à une température de 40°C à 180°C,
où le matériau hôte contient du graphite,
où le matériau hôte est capable d'absorption et de désorption de lithium dans un système électrochimique et est adapté à une utilisation dans une électrode négative d'une batterie lithium-ion, et
où le terme « prélithiation » désigne la lithiation du matériau hôte avant la mise en contact avec un électrolyte.

2. Le procédé selon la revendication 1, où la poudre métallique de lithium et le matériau hôte sont dispersés dans une solution non aqueuse.

3. Le procédé selon la revendication 2, où la solution non aqueuse contient un solvant hydrocarboné.

4. Le procédé selon la revendication 1, comprenant en outre la formation du matériau hôte prélithié en une électrode.

5. Le procédé selon la revendication 4, comprenant en outre la formation d'une batterie au moyen de ladite électrode.
